**Europäisches Patentamt**

**European Patent Office**

**Office européen des brevets**

(19)

(11) Publication number: **0 113 471**

**B1**

(12)

# EUROPEAN PATENT SPECIFICATION

(45) Date of publication of patent specification: **21.02.90**

(51) Int. Cl.⁵: **G 06 K 9/34**

(21) Application number: **83112896.2**

(22) Date of filing: **21.12.83**

(54) **Method and apparatus for locating individual images in a field containing multiple images.**

(30) Priority: **07.01.83 US 456188**

(43) Date of publication of application:
**18.07.84 Bulletin 84/29**

(45) Publication of the grant of the patent:
**21.02.90 Bulletin 90/08**

(84) Designated Contracting States:
**CH DE FR GB IT LI NL**

(56) References cited:
**EP-A-0 014 758**
**DE-A-3 128 794**
**US-A-3 805 237**

**THE RADIO AND ELECTRONIC ENGINEER, vol. 47, no. 1/2, January/February 1977, pages 33-48, London, GB; J.R. ULLMANN et al.: "Picture recognition and analysis"**
**IDEM**

(73) Proprietor: **International Business Machines Corporation**
**Old Orchard Road**
**Armonk, N.Y. 10504 (US)**

(72) Inventor: **Godlsbey, Michael Alfred**
**825 26th Street NW**
**Rochester, MN 55901 (US)**
Inventor: **Jones, Eugene Reese**
**641 Horihan Court SW**
**Rochester, MN 55901 (US)**
Inventor: **Micka, William Frank**
**3921 E. La Espalda**
**Tucson Arizona 85718 (US)**
Inventor: **Robinson, Thomas Scott**
**2723 Pinewood Road**
**Rochester, MN 55901 (US)**

(74) Representative: **Bravi, Alfredo**
**IBM Italia S.p.A. Direzione Brevetti P.O.Box 137**
**I-20090 Segrate (Milano) (IT)**

## Description

The present invention relates to a method and apparatus for locating individual images in a field containing multiple images, so that each individual image can be processed as a single entity.

The hard part in character recognition is to turn smudged, skewed, run-together, and misaligned patches of ink on a document into well-defined precisely located rectangles which contain one character to be analyzed.

A large number of methods have been put forth to locate and separate individual characters on a document. Most of these previous methods involve the determination of a white (i.e., background color) path between every pair of characters: a blank vertical strip, a serpentine boundary, and so forth. This approach is usually called "segmentation". Another approach, called "blocking", attempts to isolate image into blocks which are easily separable but may contain multiple characters. The blocks are then reduced to individual characters by other means, such as by division into equal-width increments according to a greatest common factor of their varying sizes.

US—A—3 805 239 describes a method to isolate individual images by successively scanning the source document to provide a binary map of the information contained therein, and processing small portions of the map to consider connected those one state bits that are adjacent to one another. The method of EP—A—0 014 758 isolates individual images by scanning the image field with a video detector, assembling the incoming video data bits into groups according to given rules, and calculating coordinates for each character to be recognized.

All the previous methods have their drawbacks. Most are quite sensitive to the nature of the particular characters or patterns to be recognized, and a good segmentation algorithm for one font may not work for another. Further, blocking algorithms can be defeated by proportional-spaced characters.

The invention as claimed relates to a method and apparatus for locating individual images in a field containing multiple images by first finding small portions of an individual image which can be easily isolated, and then recombining the small portions with each other to build up the entire image.

Broadly speaking, the invention locates the individual image by first scanning the field into a stream of video elements or pels and interrogating these elements with a first logic, to produce a set of cells each representing only a portion of the one individual image. These cells may be defined by their coordinates and by certain aspects of their video contents. Next, a blocking logic combines certain cells with each other to produce a block containing an area all of the individual image. The representation of that area, such as a set of document coordinates, selects the particular video elements belonging to the image. The block is preferably produced by combining individual cells with each other, rather than by combining cells with a developing block.

(It should be noted that the term "block" as used in connection with the invention is quite different than the usage of the term "blocking" in one aspect of the prior art, which actually should be called "deblocking". Henceforth, the word "block" will only be used in the sense of the present invention.)

The process of the present invention has several important advantages over the prior art. It can handle many different kinds of characters and other patterns without having to devise different sets of segmentation rules. The dividing/reconstructing rules are simpler as well as more general, since they relate to smaller combinations of picture elements (pels). No vertical or other artificial boundaries between adjacent characters need be found; in fact, the area defined for one character can even overlap that for another. The dividing and reconstructing of multiple characters in a line can take place in parallel.

One way of carrying out the invention is described in detail below with reference to the drawings which illustrate only one specific embodiment, wherein:

Figure 1 is a block diagram of a character-recognition apparatus incorporating the present invention.

Figure 2a and 2b show examples of character images on a document, including cells and blocks found by the invention.

Figure 3a and 3b set forth detailed control logic used by the recognition system of Figure 1.

Figure 4 is a block diagram of the hardware used in the implementation of the invention.

Figure 5 shows the input logic of Figure 4.

Figure 6 details the generate matrix of Figure 5.

Figure 7 details the start logic of Figure 5.

Figure 8 details the end logic of Figure 5.

Figure 9 details the profile logic of Figure 5.

Figure 10 details the flag logic of Figure 5.

Figures 11a, 11b and 11c represent a flow chart of blocking logic according to the invention.

Figure 12 details the line-finding procedure used in Figure 11.

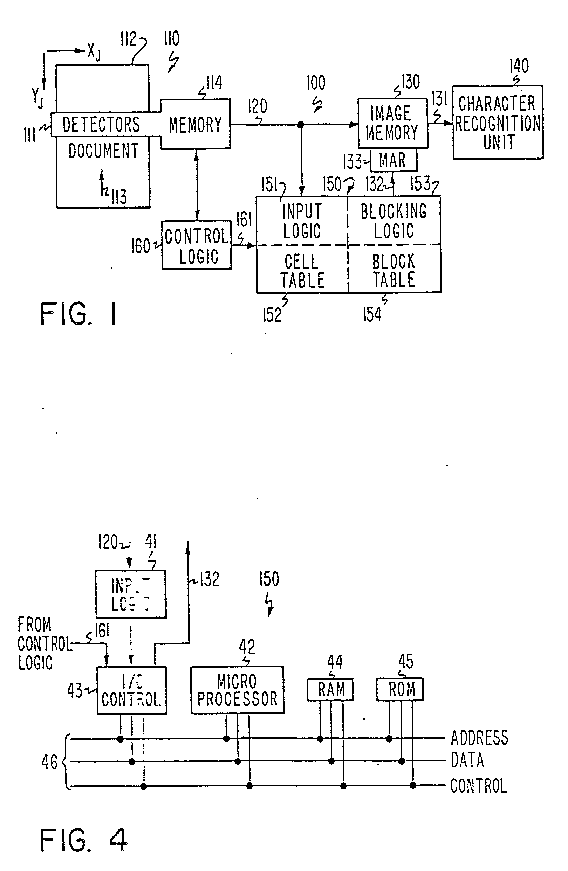

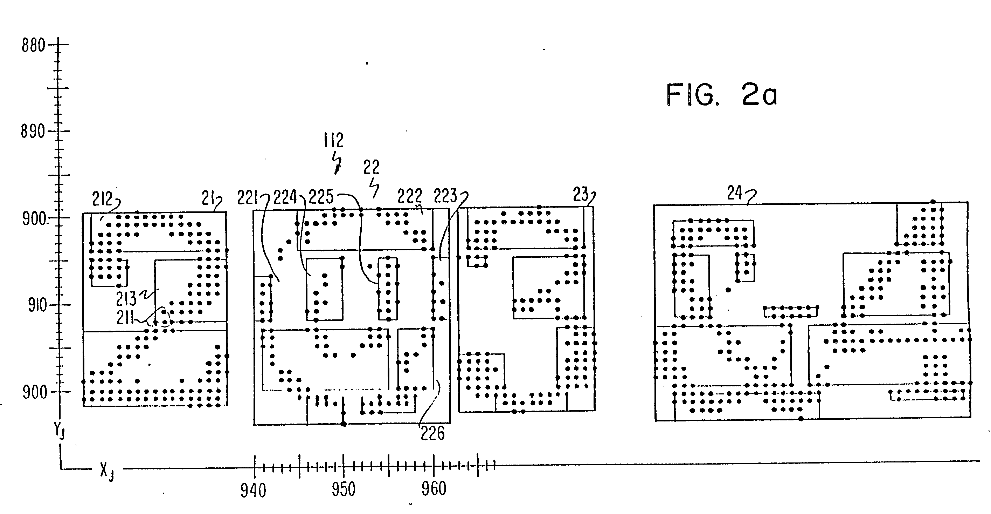

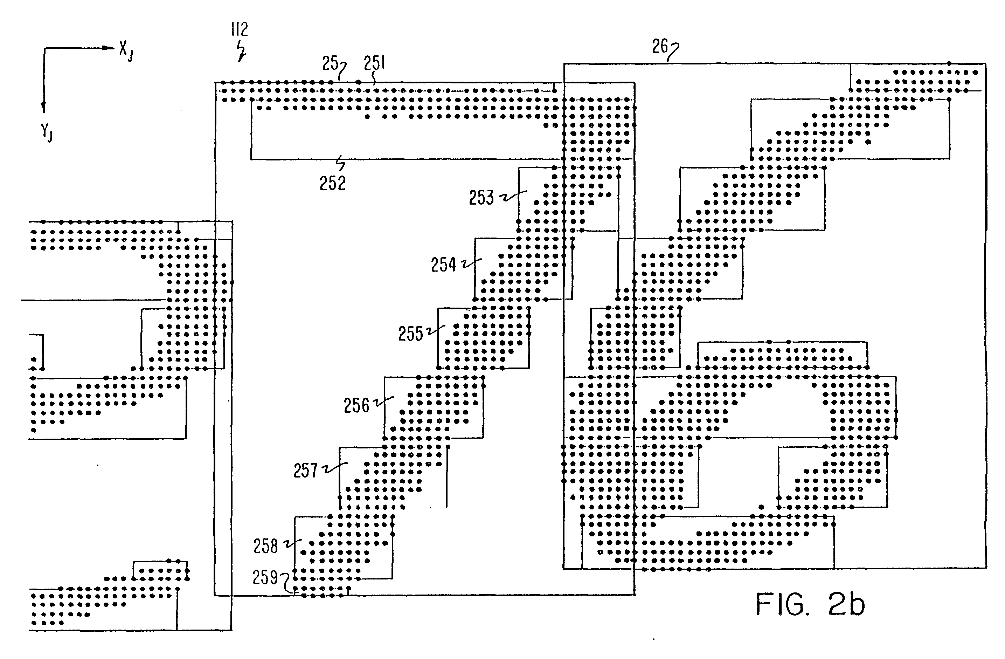

Figure 1 is a high-level block diagram of an optical character-recognition (OCR) system 100 capable of carrying out the present invention. Optical scanner 110 includes a line of photo detectors 111 for sensing 2,048 digitized picture elements (pels) in parallel across the width of document 112 as it is transported by any conventional means (not shown) in the direction of arrow 113. Scratch-pad memory 114 reformats the video data from detectors 111, as will be described more fully in connection with Figures 2a and 2b. Parallel bus 120 transmits pel data in 8-bit bytes to image buffer memory 130 for temporary storage. Conventional recognition system 140 receives pels for entire images over output bus 131.

The character edge locater unit 150 samples video data on bus 120 to produce coordinates which are then output to memory address register (MAR) 133 to control which bytes in memory 130 are to be output to recognition system 140 as comprising a single image to be interpreted. Unit 150 includes input logic 151 coupled to bus 120 for locating coherent video data collections each representing only a portion (cell) of a single character. The coordinates of these individual portions are stored in a cell table 152. Blocking logic 153 then operates upon the coordinates of these portions to recombine certain portions into blocks each representing an entire character. The coordinates of these blocks are stored in a block table 154, and are then sent via memory address bus 132 to supply MAR 133 with addresses of a single image to be sent to recognition unit 140.

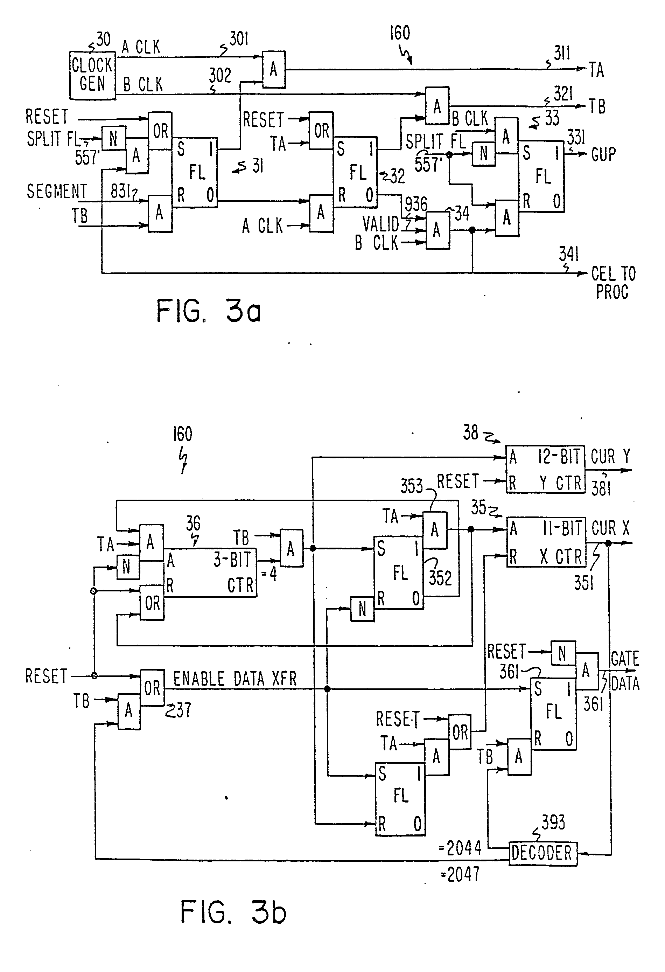

Control logic 160 provides conventional timing and control signals to the other elements of system 100 for synchronization purposes. The signals relevant to the present invention are discussed in connection with Figure 3a and 3b.

Figures 2a and 2b are a representation of a parts of a document 112, and will be used as a running example throughout the description. The coordinate Xj runs horizontally across the document, from Xj=0 at the left edge to Xj=2047 at the right edge. The vertical coordinate Yj runs from the top Yj=0 to the bottom of the document, maximum Yj=4095. The size of one pel for a typical document is a square about 0,1 mm. on a side. In the two sample print lines on the document portions shown in Figures 2a and 2b, the black dots indicate pels belonging to images or noise. The upper line in Figure 2a shows characters 21—24 having a relatively light print density, while the density of characters 25—26 in the lower line of Figure 2b represents more of a normal or medium density range. The smaller, light-outlined rectangles represent the boundaries of individual cell units representing portions of characters 21—26. The bigger, heavier-outlined rectangles enclose blocks of cells recombined into whole characters.

For purposes of the following description, pel coordinates are identified by the horizontal or X distance from a fiducial point at or near the left edge of document 112, followed by the vertical or Y distance from the same point. Since the document is read by horizontal scans proceeding vertically downward, the Y coordinate can be considered to be a scan number, while X represents a distance from the beginning of that scan. Video data are transmitted over 8-bit-wide (1-byte) bus 120 from 8 scans in parallel, then serially from left to right. That is, the contents of bus 120 at any given bit time represents pels $(X_i, Y_j)$, $(X_i, Y_{j+1})$, . . ., $(X_i, Y_{j+7})$; at the following bit time, the contents are $(X_{i+1}, Y_j)$, $(X_{i+1}, Y_{j+1})$, . . ., $(X_{i+1}, Y_{j+7})$. After the right end of these scans, i.e., after the byte for i=2047 has been sent, the next 8 scans are sent as a group, beginning with $(X_1, Y_{j+8})$, $(X_1, Y_{j+9})$, . . ., $(X_1, Y_{j+15})$. For this reason, cell heights are limited to 8 bits; they do not extend across groups of 8 scans in the vertical direction. In principle, any maximum height could be used. An 8-scan group as presented on bus 120 is called a scan row.

Figure 3a shows relevant details of control logic 160, Figure 1, for synchronizing the operation of various other portions of system 100.

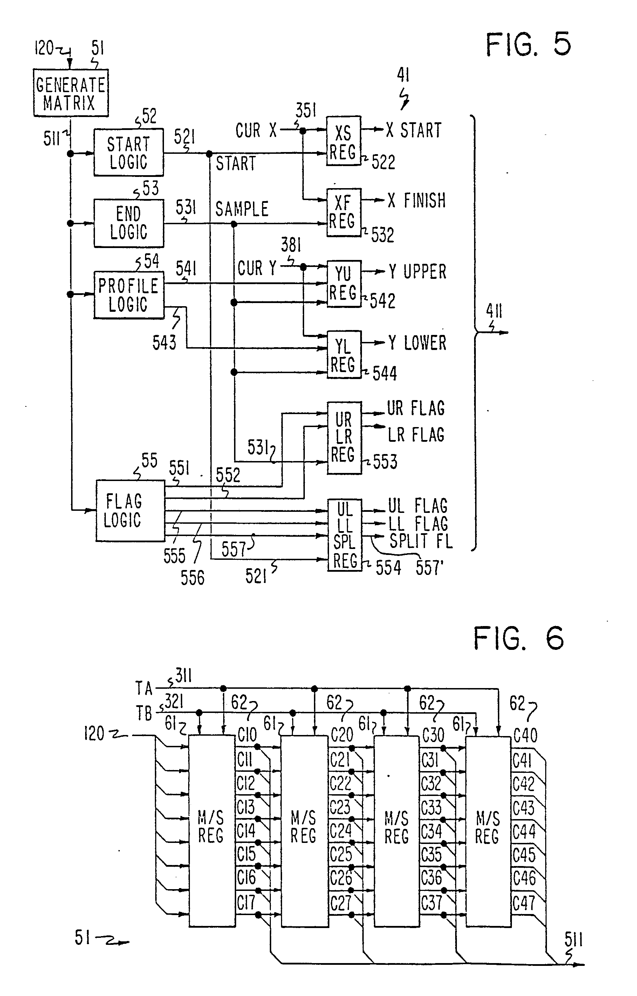

Clock generation circuitry 30 produces continuously running non-overlapping clock signals A CLK 301 and B CLK 302 from which gating logic 31 and 32 derive gated control clock signals TA 311 and TB 321. Clock signals TA and TB provide the clocking necessary for the operation of the shift registers and counters for determining cell parameters and for synchronizing the remaining control logic. Gating logic 33 generates signal GUP 331 (gate upper) to provide special clocking for a split-cell condition to be described. Normally GUP is on and only the parameters describing one cell are presented to cell tables 152 for each cell ending condition (SEGMENT 831) detected. If the SPLIT condition is indicated by the setting of SPLIT FL 557', see Figure 5, two cells must be stored in cell tables 152. GUP will be on for the first (upper) cell of a split cell, and the split condition will also be indicated via SPLIT FL 557'. The cell TO PROC signal 341 from gating logic 34 transfers the generated cell parameters to microprocessor RAM 44, Figure 4. Also, if a split cell is indicated via SPLIT FL 557', the CEL TO PROC signal enables the reset of GUP and SPLIT FL 557'; this in turn enables the gating of the parameters associated with the lower cell to cell tables 152 in microprocessor RAM 44, via the next occurrence of cell TO PROC. RESET is a conventional system reset signal that returns the system to a known state.

Figure 3b details that part of control logic 160 for managing the counting of pels to determine the X, Y coordinates of each on document 112.

X counter 35 is an 11-bit (0-2047) counter that provides the running pel X coordinate reference CUR X, 351; it advances one count for each pel increment out of memory 114 in the X direction. X counter 35 advances in synchronization with pel movement through input logic 151. Its value always represents the X position of the current pel group in cell-generate positions C30—C37 of matrix 51, Figure 6. Three-bit counter 36 provides a 4-scan delay before the X counter enable latch 352 is set, to compensate for the delay in the detection of the cell start and ending conditions from cell generate matrix 51. Latch 352 synchronizes the 4-scan delay and the first increment of X counter 35. Once enabled by latch 352, X counter 35 advances once per TA clock pulse, via AND 353; that is, once for each pel advance. It continues to advance until decoder 393 detects the ending condition X=2047, resetting control latch 352. Logic 361 sends GATE DATA signal 361 to scanner 110, Figure 1, to enable the transfer of pel data from memory 114 to image memory 130 and to input logic 151. When GATE DATA is active, every TA pulse presents a new group of 8 pels to bus 120. GATE DATA remains active until control latch 362 resets upon the detection of XCTR=2044 by decoder 393, indicating that 2048 8-pel groups have been transferred. X counters 35 continues to advance every TA time until its maximum value of 2047 is detected, indicating that all data for the current group of 8 scans have been processed by input logic 151. Detection of the ending condition causes logic 37 to set ENABLE DATA XFR=0. This in turn resets control latch 352 to allow delay counter 36 to advance, thus starting the process all over again.

Y counter 38 provides CUR Y coordinate 381, representing the high-order 9 bits of the Y coordinate of the current 8 scans. Y counter 38 advances once at the start of processing of the information associated with a group of 8 scans, via the same signal which sets X-enable latch 352. Y counter 38 is a wrap-around counter, and its "R" input forces all positions to a "1" state; thus, the first pulse to its "A" input advances it to the Y=0 state.

Figure 4 is an overview of the implementation of locater unit 150 in Figure 1.

Hardwired random logic 41 samples the video data from bus 120 to perform the input-logic functions 151, Figure 1. This form of logic was chosen because of the high speed required to sample the video stream in real time, and because the functions are relatively independent of each other, allowing them to be performed in parallel. Figures 5—10 describe the individual logic functions in greater detail.

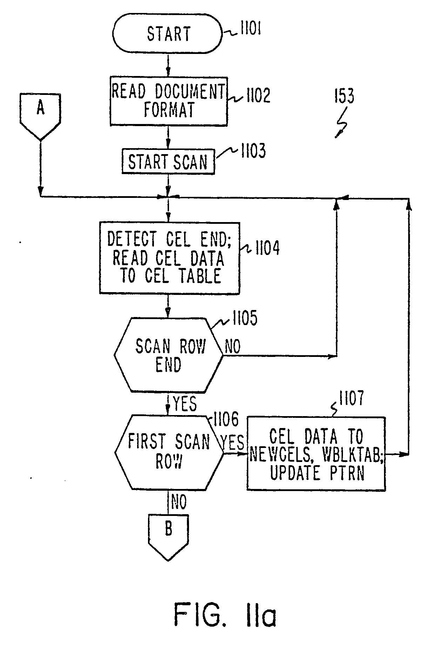

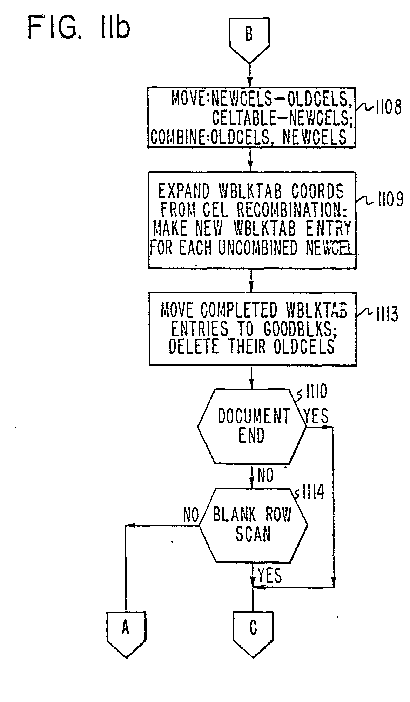

A conventional microprocessor 42 receives the outputs 411 of logic 41 through conventional parallel input/output (PIO) control unit 43, which also handle output data to address bus 132. Random-access read/write memory (RAM) 44 stores cell table 152 and block table 154. Read-only memory (ROM) 45 stores microcode for implementing blocking logic 153 in processor 42. In contrast to input logic 151, the lower speed requirements and more serial nature of logic 153 allow the use of the less expensive microcoded implementation. Logic 153 and the formats of tables 152 and 154 are described more fully in connection with Figures 11a—11c. Units 42—45 of Figure 4 are coupled together via conventional data, address, and control buses 46.

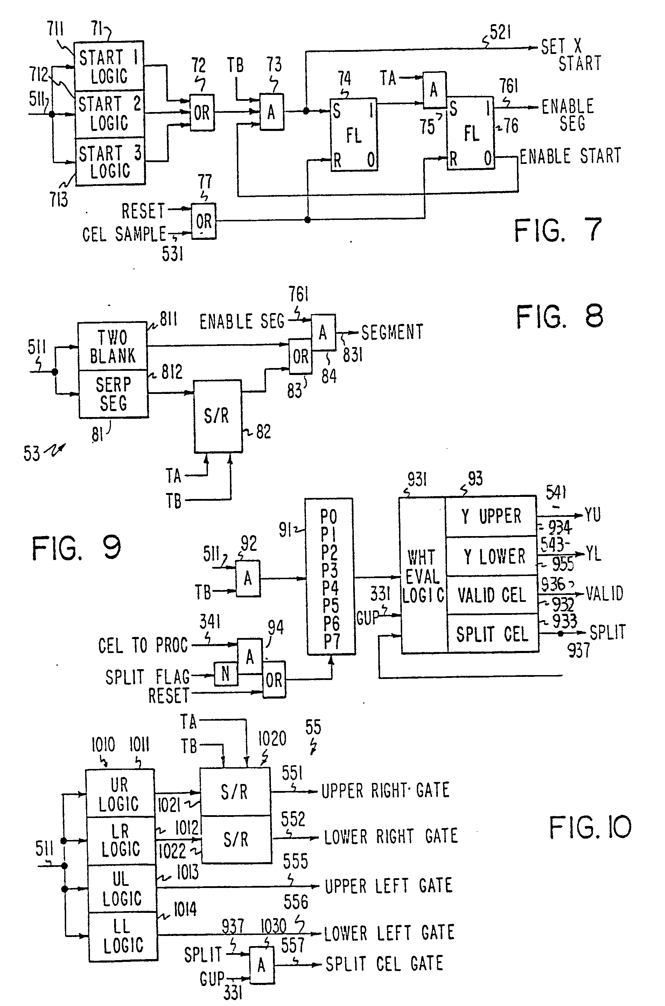

Figure 5 is a block diagram of input logic 41. Generate matrix 51, shown in greater detail in Figure 6, temporarily stores video bits from bus 120 in order to make a larger group of pels available in parallel on bus 511 to other units of input logic 41. Cell start logic 52, expanded in Figure 7, samples certain pels 511 to produce a START signal 521 indicating the beginning of a new cell. Latch 522 receives X (horizontal) coordinates from counter 35, Figure 3, and latches the current output as X START upon receipt of START signal 521. End logic 53, detailed in Figure 8, samples other pels 511 to produce a SAMPLE signal 531 indicating the end of the current cell. SAMPLE signal causes latch 532 to retain the current horizontal pel coordinate from counter 35 as X FINISH on logic bus 411.

Counter 38 keeps the high-order 9 bits of the 12-bit Y (scan or vertical) coordinate. Profile logic 54, detailed in Figure 9, provides the low-order 3 bits for the upper and lower cell boundaries. Lines 541 provide a 3-bit value for the upper end of a cell within the 8-scan segment supplied by pels 511. Latch 542 captures these 9 high-order and 3 low-order bits in response to SAMPLE signal 531, as a 12-bit Y UPPER address representing the top of the current cell. Line 543 provides 3 low-order bits for the lower end of a cell within the same 8-scan row. Latch 544, also gated by sample signal 531, stores a 12-bit Y LOWER address representing the bottom of the current cell.

Flag logic 55, described more fully in Figure 10, produces five binary flags indicating various combinations of video bits 511 within the boundaries of the current cell identified by the X START, X FINISH, Y UPPER and Y LOWER addresses. Upper right gate URG flag 551 and lower right gate LRG flag 552 are latched in register 553 by SAMPLE signal 531. Another register 554, latched by X START signal 521, holds upper left gate ULG flag 555 and lower left gate LLG flag 556. Register 554 also holds a SPLIT flag 557; this flag indicates the presence of more than one cell within the same 8-scan group monitored by generate logic 51. The latched split-flag output 557' is also used in Figure 3, as previously described.

Figure 6 shows generate logic 51 in more detail. An 8-high, 4-wide matrix of master-slave flip-flops 61 (or, equivalently, 8 4-stage shift registers) receives video bits from the current group of 8 scans in parallel. Flip-flops 61 are clocked by two-phase bit-timing signals TA and TB. The 32 bit outputs collectively numbered 62 are brought out to bus 511 to provide a parallel view of 4 pels in the X (horizontal) direction of each of 8 scans in the Y (vertical) direction. Each bit is separately labelled, C10—C47.

Figure 7 shows start logic 52. Boolean logic 71 samples bits C10—C47 on bus 511 to determine the presence of enough black pels to start a new cell. Logic 711 looks for any 3 black bits in a 2-by-2 bit square, such as the circled bits 211 in character 21, Figure 2a. The formal equation for producing an output from logic 711 is:

$$\text{START } 1 = C30 \cdot \overline{C40} \cdot (C31 + C41) + C31 \cdot C41 \cdot$$
$$(C30 + C40 + C32 + C42) + C32 \cdot C42 \cdot$$
$$(C31 + C41 + C33 + C43) + \ldots + C37 \cdot C47 \cdot$$
$$(C36 + C46)$$

Logic 712 looks for any 3 vertically adjacent black bits, viz.:

$$\text{START } 2 = (C40 \cdot C41 \cdot C42) + (C41 \cdot C42 \cdot C43) + \ldots + (C45 \cdot C46 \cdot C47)$$

Logic 713 finds any 3 horizontally adjacent bits:

$$\text{START } 3 = (C20 \cdot C30 \cdot C40) + (C21 \cdot C22 \cdot C23) + \ldots + (C27 \cdot C37 \cdot C47)$$

OR gate 72 combines these three conditions, gating latch 74 via AND 73 at clock phase TB whenever latch 76 is reset. AND 75 samples this signal at the next TA clock phase to set latch 76 to produce an ENABLE SEGMENTATION signal 761 to look for a cell-end condition. OR 77 resets latches 74 and 76 upon a RESET signal or a cell SAMPLE signal 531. X START output is taken from the output of AND 73.

End logic 53, Figure 8, examines the video bits on lines 511 to determine the X coordinate at which a cell, having been started by logic 52, should be terminated for lack of further connected black video. Although any of a number of conventional segmentation techniques could be used in this setting, two relatively straightforward algorithms have been chosen. Boolean logic 81 contains a random-logic network 811 for detecting two adjacent blank (i.e., white) vertical columns, according to the equation:

$$2BLANK = \underline{C20} \cdot \underline{C30} \cdot \underline{C21} \cdot \underline{C31} \cdot \ldots \cdot \underline{C27} \cdot \underline{C37}$$

(An underbar in this and other equations indicates a logical inverse or "not" function.)

The pels in region 221, Figure 2a, represent this type of segmentation. Another random-logic network 812 detects a serpentine path of two blank pels between black video. The complete equation for network 812 is:

$$SERP = ((\underline{C10} \cdot \underline{C11} \cdot \underline{C20} \cdot \underline{C21}) + (\underline{C20} \cdot \underline{C21} \cdot \underline{C30} \cdot \underline{C31}) + (\underline{C30} \cdot \underline{C31} \cdot \underline{C40} \cdot \underline{C41}))$$

$$\cdot ((\underline{C11} \cdot \underline{C12} \cdot \underline{C21} \cdot \underline{C22}) + (\underline{C21} \cdot \underline{C22} \cdot \underline{C31} \cdot \underline{C32}) + (\underline{C31} \cdot \underline{C32} \cdot \underline{C41} \cdot \underline{C42}))$$

$$\cdot ((\underline{C12} \cdot \underline{C13} \cdot \underline{C22} \cdot \underline{C23}) + (\underline{C22} \cdot \underline{C23} \cdot \underline{C32} \cdot \underline{C33}) + (\underline{C32} \cdot \underline{C33} \cdot \underline{C42} \cdot \underline{C43}))$$

$$\cdot ((\underline{C13} \cdot \underline{C14} \cdot \underline{C23} \cdot \underline{C24}) + (\underline{C23} \cdot \underline{C24} \cdot \underline{C33} \cdot \underline{C34}) + (\underline{C33} \cdot \underline{C34} \cdot \underline{C43} \cdot \underline{C44}))$$

$$\cdot ((\underline{C14} \cdot \underline{C15} \cdot \underline{C24} \cdot \underline{C25}) + (\underline{C24} \cdot \underline{C25} \cdot \underline{C34} \cdot \underline{C35}) + (\underline{C34} \cdot \underline{C35} \cdot \underline{C44} \cdot \underline{C45}))$$

$$\cdot ((\underline{C15} \cdot \underline{C16} \cdot \underline{C25} \cdot \underline{C26}) + (\underline{C25} \cdot \underline{C26} \cdot \underline{C35} \cdot \underline{C36}) + (\underline{C35} \cdot \underline{C36} \cdot \underline{C45} \cdot \underline{C46}))$$

$$\cdot ((\underline{C16} \cdot \underline{C17} \cdot \underline{C26} \cdot \underline{C27}) + (\underline{C26} \cdot \underline{C27} \cdot \underline{C36} \cdot \underline{C37}) + (\underline{C36} \cdot \underline{C37} \cdot \underline{C46} \cdot \underline{C47}))$$

The region 222, Figure 2a, represents a serpentine segmentation between two cells. One-bit shift register 82, clocked by phases TA and TB, delay the serpentine segmentation signal SERP for proper synchronization with blank-column logic 811. Then the two segmentation signals are combined in OR 83 and sent out through AND 84 under the control of enabling signal 761 from Figure 7 as SEGMENT signal 831.

Profile logic 54, Figure 9, is built around an 8-bit-high profile register 91. Once every bit time, TB gates one column of video data C30—C37 through ANDs 92, where each bit is ORed with the bits already present in the corresponding register positions P0—P7. That is, register 91 presents an "edge-on" view of a cell, wherein black video at any vertical position in the current 8 scans is accumulated. Profile-evaluation matrix 93 contains Boolean combinatorial logic for determining the vertical boundary addresses of the current cell, and for detecting the presence of split cells within the current group of 8 scans. White-evaluation logic 931 finds 3-bit-high white strips in register 91; these functions W0—W5 in logic 931 are used in the other portions of logic 93.

$$W0 = \underline{P0} \cdot \underline{P1} \cdot \underline{P2} \qquad W3 = \underline{P3} \cdot \underline{P4} \cdot \underline{P5}$$

$$W1 = \underline{P1} \cdot \underline{P2} \cdot \underline{P3} \qquad W4 = \underline{P4} \cdot \underline{P5} \cdot \underline{P6}$$

$$W2 = \underline{P2} \cdot \underline{P3} \cdot \underline{P4} \qquad W5 = \underline{P5} \cdot \underline{P6} \cdot \underline{P7}$$

Valid-cell logic 932 uses the Wn and Pn signals to produce VALID signal 936 according to the following equation.

$$VALID = P0 + (P1 \cdot \underline{W2}) + (P2 \cdot \underline{W3}) + (P3 \cdot \underline{W4}) + (P4 \cdot \underline{W1}) + (PS \cdot \underline{W2}) + (P6 \cdot \underline{W3}) + P7$$

VALID is a minimum character requirement; it asserts that there is more black video in the cell than that due to random smudges.

Split-cell logic 933 detects the presence of two black profiles separated by a white space in register 91. The split-cell capability makes the cell less position-dependent in the vertical direction. It also enables the vertical segmentation of characters or images in close vertical proximity to each other. An example of its usefulness is the vertical segmentation of closely spaced character lines when a lower case "g" is encountered directly above an upper case "T". The equation for this condition is:

$$\begin{aligned}
\text{SPLIT} = &\ W1 \cdot W2 \cdot W3 \cdot W4 \cdot P0 \cdot P7 + W1 \cdot P0 \cdot P7 + W1 \cdot P0 \cdot \\
&\ (P5 \cdot P6 + P4 \cdot P6) + W2 \cdot P0 \cdot (P5 \cdot P6 + P7) \\
&\ + W3 \cdot P0 \cdot P7 + W3 \cdot P7 \cdot P1 \cdot P2 + W4 \cdot P0 \cdot P7 + W4 \cdot P7 \cdot \\
&\ (P1 \cdot P2 + P2 \cdot P3 + P1 \cdot P3)
\end{aligned}$$

Upper-boundary logic 934 produces the low-order 3 bits YU 541 of the address of the top of the current cell within the current group of 8 scans. Logic 934 responds to the Pn and Wn signals, and also to SPLIT signal 937 and GUP 331 (from Figure 3a), since two upper boundaries must be transmitted when SPLIT indicates two cells within the same group of scans. The table below shows the conditions under each of the binary addresses 000—111 is generated at YU. (Vertical addresses increase downwardly on document 112.)

| Upper Address | Condition |
|---|---|
| 000 | $\overline{\text{SPLIT}} \cdot P0 + \text{SPLIT} \cdot \text{GUP} \cdot P0$ |
| 001 | $\overline{\text{SPLIT}} \cdot \overline{P0} \cdot \overline{P1} \cdot \overline{W2} + \text{SPLIT} \cdot \text{GUP} \cdot \overline{P0} \cdot P1$ |
| 010 | $\overline{\text{SPLIT}} \cdot \overline{P0} \cdot \overline{P1} \cdot P2 \cdot W3 + \text{SPLIT} \cdot \text{GUP} \cdot \overline{P0} \cdot \overline{P1} \cdot P2$ |
| 011 | $\overline{\text{SPLIT}} \cdot P3 \cdot W0 \cdot \overline{W4}$ |
| 100 | $\overline{\text{SPLIT}} \cdot P4 \cdot W1 \cdot \overline{W5} + \text{SPLIT} \cdot \overline{\text{GUP}} \cdot P4$ |
| 101 | $\overline{\text{SPLIT}} \cdot P5 \cdot (P6 + P7) \cdot W2 + \text{SPLIT} \cdot \overline{\text{GUP}} \cdot \overline{P4} \cdot P5$ |
| 110 | $\overline{\text{SPLIT}} \cdot P6 \cdot P7 \cdot W3 + \text{SPLIT} \cdot \overline{\text{GUP}} \cdot \overline{P4} \cdot \overline{P5} \cdot P6$ |
| 111 | $\overline{\text{SPLIT}} \cdot P7 \cdot W4 + \text{SPLIT} \cdot \overline{\text{GUP}} \cdot P7 \cdot W4$ |

Lower-boundary logic 935 similarly produces the low-order 3 bits YL 543 of the address of the current cell. (Since YL and YU both occur in the same 8-scan group, the upper 9 bits of their addresses are the same.) Logic 935 responds to Pn, Wn, SPLIT and GUP as indicated in the following table

| Lower Address | Condition |
|---|---|
| 000 | $\overline{\text{SPLIT}} \cdot P0 \cdot W1 \cdot W2 \cdot W3 \cdot W4 + \text{SPLIT} \cdot \text{GUP} \cdot P0 \cdot W1$ |
| 001 | $\overline{\text{SPLIT}} \cdot P0 \cdot P1 \cdot W2 + \text{SPLIT} \cdot \text{GUP} \cdot P1 \cdot \overline{P2} \cdot \overline{P3}$ |
| 010 | $\overline{\text{SPLIT}} \cdot (P0 + P1) \cdot P2 \cdot W3 + \text{SPLIT} \cdot \text{GUP} \cdot P2 \cdot \overline{P3}$ |
| 011 | $\overline{\text{SPLIT}} \cdot P3 \cdot \overline{W0} \cdot W4 + \text{SPLIT} \cdot \text{GUP} \cdot P3$ |
| 100 | $\overline{\text{SPLIT}} \cdot P4 \cdot \overline{W1} \cdot W5$ |
| 101 | $\overline{\text{SPLIT}} \cdot P5 \cdot \overline{P6} \cdot \overline{P7} \cdot \overline{W2} + \text{SPLIT} \cdot \overline{\text{GUP}} \cdot P5 \cdot \overline{P6} \cdot \overline{P7}$ |
| 110 | $\overline{\text{SPLIT}} \cdot P6 \cdot \overline{P7} \cdot \overline{W3} + \text{SPLIT} \cdot \overline{\text{GUP}} \cdot P6 \cdot \overline{P7}$ |
| 111 | $\overline{\text{SPLIT}} \cdot P7 + \text{SPLIT} \cdot \overline{\text{GUP}} \cdot P7$ |

Profile reset logic 94 clears register 91 for the next cell. The system RESET signal is effective by itself. Otherwise CELL-TO-PROCESSOR signal 341 is ANDed with the inverted split flag at the end of the current cell.

Figure 10 describes flag logic 55 for generating the flag bits for indicating the video contents of the current cell. Corner logics 1010 examine video bits 511 for white video in each corner of the current cell; more specifically, a flat is set if a 4-by-4 bit triangular area in the corresponding corner consists entirely of white pels. Upper-right logic 1011 produces the flat or gate bit URG 551 by means of the following Boolean function.

$$\text{URG} = \overline{C10} \cdot \overline{C20} \cdot \overline{C30} \cdot \overline{C40} \cdot \overline{C11} \cdot \overline{C21} \cdot \overline{C31} \cdot \overline{C12} \cdot \overline{C22} \cdot \overline{C13}$$

Lower-right logic 1012 produces flag bit LRG 552 as follows.

$$LRG = \underline{C17} \cdot \underline{C27} \cdot \underline{C37} \cdot \underline{C47} \cdot C16 \cdot C26 \cdot C36 \cdot \underline{C15} \cdot \underline{C15} \cdot \underline{C25} \cdot C14$$

Upper-left logic 1013 functions similarly.

$$ULG = \underline{C10} \cdot \underline{C20} \cdot \underline{C30} \cdot \underline{C40} \cdot \underline{C21} \cdot \underline{C31} \cdot \underline{C41} \cdot \underline{C32} \cdot \underline{C42} \cdot \underline{C43}$$

Lower-left logic 1014 has the following form.

$$LLG = \underline{C17} \cdot \underline{C27} \cdot \underline{C37} \cdot \underline{C47} \cdot \underline{C26} \cdot \underline{C36} \cdot \underline{C46} \cdot \underline{C35} \cdot \underline{C45} \cdot \underline{C44}$$

Referring back to Figure 5, the right-side flags URG 551 and LRG 552 are latched by SAMPLE at the end of the cell, while left-side flags ULG 555 and LLG 556 are latched by X START at the beginning. To provide both sets of flag bits at the same time, the right-side flags are delayed in 3-bit shift registers 1021 and 1022, Figure 10. The split-cell flag or gate 557 is derived from the SPLIT signal of Figure 9 by AND 1030 with gate-upper cell signal GUP 331 from Figure 3. That is, gate 557 is inactive for a split cell only when the upper portion is being gated out.

Figures 11a, 11b and 11c are a flow chart of the cell blocking logic 153 (Figure 1), which is physically located in ROM 45 (Figure 4). The overall function of the blocking logic is to combine individual cells, produced by input logic 151 and stored in cell table 152, into larger blocks representing entire characters. The combination depends upon the locations of the cells relative to each other, and upon the video content of the cells and their neighbors. The coordinates of these combined blocks are then stored in block table 154 and transferred to MAR 133 so as to cause whole characters to be transferred to recognition unit 140 for analysis. The blocking logic can also perform a conventional line-finding function, in which entire lines of characters are tracked to compensate for skew or other nonuniformities.

The blocking logic uses the following data structures, all stored in RAM 44, Figure 4. The first structure, CELTAB, contains entries in table 152, Figure 1; the GOODBLKS entries comprise block table 154. The other structures are intermediate data.

CELTAB (cell table) contains the cell coordinates generated by the cell logic hardware 41, Figure 5. A horizontal start XS, horizontal finish XF, vertical upper YU, vertical lower YL and a flag byte FL describing the video comprising one cell entry in the CELTAB. Each entry has the following format:

| XS | XF | YU | YL | FL |
|---|---|---|---|---|

OLDCELS (old cells) Each entry contains one complete 8-bit-high scan row of cells. OLDCELS contain either the first row scan or the previous row scan of cells. The format of each entry is the same as that of CELTAB, but also includes a pointer PTRO to the WBLKTAB entry of which the cell is a part:

| XSO | XFO | YUO | YLO | FLO | PTRO |
|---|---|---|---|---|---|

NEWCELS (New cells) contain one complete 8-bit-high scan row of cells. NEWCELS contain the current scan row of cells. The entry format is the same as that of CELTAB, with the addition of a pointer PTRN to the WBLKTAB block with which the cell has been combined:

| XSN | XFN | YUN | YLN | FLN | PTRN |
|---|---|---|---|---|---|

WBLKTAB (work block table) contains the cumulative results of blocking or combination of OLDCELS and NEWCELS values. The values are X start, X final, Y upper, Y lower, and forward and backward chain addresses pointing to the previous and next block in the WBLKTAB. Also, a leg counter indicates when no more cells have been added into a block in the WBLKTAB. The entry format is:

| XSWB | XFWB | YUWB | YLWB | PASTBLK | NEXTBLK | LEGCTR |
|---|---|---|---|---|---|---|

GOODBLKS table entries contain the X and Y coordinates of video to be selected by the microprocessor in image memory 130, Figure 1 and sent to recognition unit 140. The X start/finish and Y upper/lower corners of these good blocks are formatted thus:

| XSBG | XFBG | YUBG | YLBG |
|---|---|---|---|

After starting at 1101, Figure 11a, blocking logic 153 may first, at 1102, optionally obtain from some external interface (not shown) a description or format of the document 112. Such a description is conventional to specify particular document areas to be scanned and analyzed, to specify fonts and nominal sizes of characters to be recognized, and so forth. Starting the document scan at 1103 activates input logic 41, Figure 4, to begin identifying cells. When the end of any cell is detected by interrupt 341, Figure 3a, at 1104, microprocessor 42 transfers the data for that cell from lines 411 through I/O ports 43 into CELTAB 152 in RAM 44. Step 1104 is repeated for further cells until block 1105 detects the end of the current group of 8 scan lines. If the current group was the first group in the document, there are no pre-existing entries in NEWCELS, OLDCELS, and WBLKTAB. Step 1106 then enables step 1107, which moves the current CELTAB entries to NEWCELS and WBLKTAB, and updates the PTRN pointer of NEWCELS to point to the corresponding entry in WBLKTAB. The procedure then returns to detect more cells until 1105 detects the "end of scan row" condition. That is, no blocking or recombination occurs during the first scan group. For the second and subsequent scan groups, as detected by 1106, step 1108 moves the current NEWCELS work entries to the OLDCELS work area. The CELTAB entries are then moved to the NEWCELS work area to allow possible combination with the cells in the previous scan group that are now stored in OLDCELS.

A valid combination in step 1108 of an OLDCELS entry with a NEWCELS entry produces an expanded set of X and Y coordinates representing a rectangle including both cells. Each OLDCELS entry has a corresponding WBLKTAB entry identified by pointer PTRO. NEWCELS entries are compared with OLDCELS entries to determine if they satisfy the recombination criteria. If a NEWCELS entry is found to combine with an OLDCELS entry, the OLDCELS corresponding WBLKTAB entries X and Y coordinates XSWB, XFWB, YUWB, YLWB are expanded to include the coordinates of the NEWCELS entry. The NEWCELS pointer PTRN is also updated to point to the updated WBLKTAB entry. Cell recombination is determined at the CELTAB level and not at the WBLKTAB level. That is, recombination occurs between cells of similar size, rather than between small cells and larger blocks. This significant feature of the invention ensures that each added increment has a good local fit with its neighbors, not merely a vague general proximity to a larger heterogeneous blob.

Step 1109 then attempts to include this combination. If a NEWCELS entry does not combine in with an existing OLDCELS entry, the NEWCELS entry is the start of a new block; a WBLKTAB entry is formed that has X and Y coordinates equal to those of the NEWCELS entry, and the PTRN pointer from the NEWCELS is updated to point to the new WBLKTAB entry. In step 1113, OLDCELS entries found to combine with NEWCELS identify completed WBLKTAB entries. These entries are then moved to the GOODBLKS table, and their corresponding OLDCELS entries are deleted. Decision block 1110 tests for the end-of-document condition by comparing the present value of Y counter 38, Figure 3b, with the maximum value from the document format information presented in block 1102. If the end of the document has been reached, processing continues with step 1115; otherwise step 1114 is performed.

Step 1109 combines horizontally overlapping cells according to the flag bytes of the candidates. In terms of the previously described OLDCELS and NEWCELS entries, the recombination requirements are: YUN—YL0 2, XFN—XS0 T1, and XF0—XSN T2. Thresholds T1 and T2 are determined via the flag conditions as shown in the following table.

Flag Conditions

| OLDCELS | NEWCELS | THRESHOLD |
|---------|---------|-----------|
| LL=0 | UR=0 | T1=0 |
| LL=0 | UR=1 | T1=1 |
| LL=1 | UR=0 | T1=1 |
| LL=1 | UR=1 | T1=2 |
| LR=0 | UL=0 | T2=0 |
| LR=0 | UL=1 | T2=1 |
| LR=1 | UL=0 | T2=1 |
| LR=1 | UL=1 | T2=2 |

Character 22, Figure 2a, illustrates the adjacency requirements for cell recombination. The parameters associated with cell 223 in NEWCELS are compared with those of cell 222 in OLDCELS to determine if their combination should be included as part of the developing block 25 in WBLKTAB. For this comparison, the flag conditions are OLDCEL LL=0, OLDCEL LR=0, NEWCEL UL=0, and NEWCEL UR=0. Thresholds T1 and T2 are thus both zero. The two cells combine together because all recombination conditions are satisfied.

XFN—XS0 T1 becomes 962—945 0;
XF0—XSN T2 becomes 960—960 0;
YUN—YL0 2 becomes 905—904 2.

In like manner, the parameters associated with cell 226 in NEWCELS are compared with those of cell 225 in OLDCELS for possible recombination into block 22 in WBLKTAB. For this comparison, the flag conditions

are OLDCEL LL=∅, OLDCEL LR=∅, NEWCEL UL=1, and NEWCEL UR=∅. From the flag conditions above, T1=∅ and T2=1. The two cells are found not to combine because one of the required recombination conditions is not satisfied: XF0—XSN T2 becomes the false statement 956—956 1.

$$XFN—XS0\ T1 \qquad \text{(satisfied)}$$
$$XF0—XSN\ T2 \qquad \text{(not satisfied)}$$
$$YUN—YL0\ 2 \qquad \text{(satisfied)}$$

But, even though cell 226 does not combine with cell 225, it does combine with cell 223 (and thus combines into block 22) when its parameters are compared with the parameters of cell 223 at a later point in the scans. That is, a cell might possibly recombine into a character block at any one of several locations, each with a different partner.

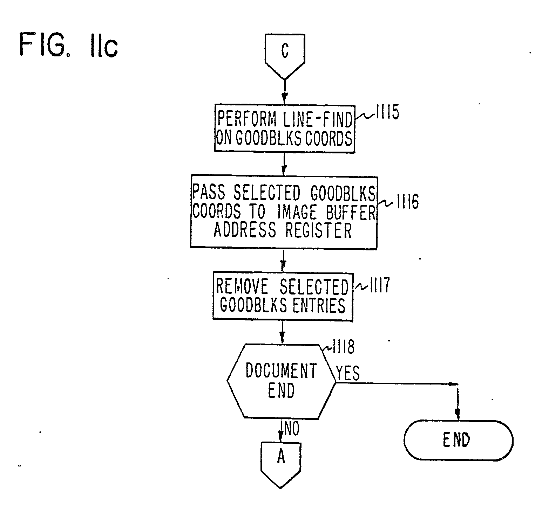

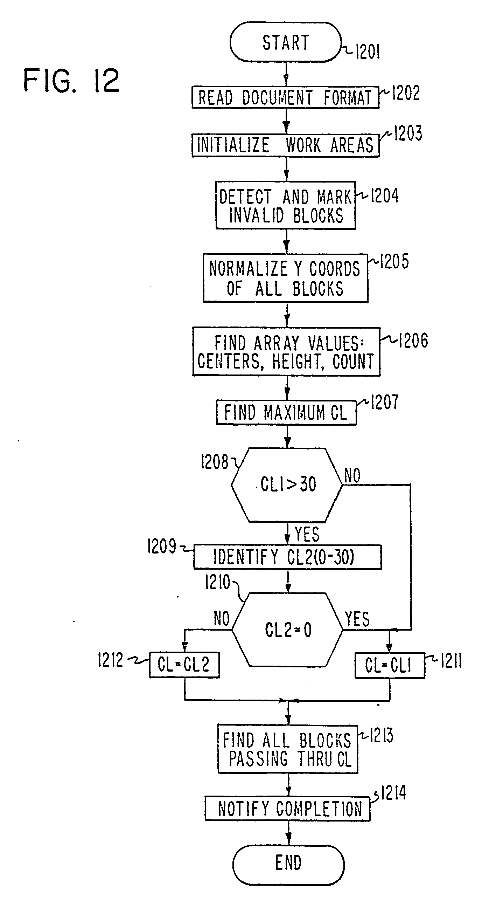

When the current group of scans are entirely blank, logic test 1114 passes control to a line-finding procedure 1115. Line-find logic 1115 is an auxiliary function which tracks skewed and misaligned character lines on the document, using the completed cell blocks contained in GOODBLKS. It will be described in greater detail in connection with Figure 12.

Logic 1116 then passes the GOODBLKS coordinates selected by line-finding procedure 1115 to MAR 133, Figure 1, as a series of addresses specifying which data bytes in memory 130 are to be sent to recognition unit 140. Finally, the selected GOODBLKS entries are cleared at 1117, in preparation for a new line of characters. If the blank scans also represent the end of the document, as previously described for decision block 1110, test 1118 ends the blocking procedure. Otherwise, control is returned to block 1104, Figure 11a.

Character 25, Figure 2b, provides an overall example of the recombination of cells into blocks. If the end of the current scan row has not been reached (block 1105, Figure 11a), any further cells are moved to NEWCELS, after the previous NEWCELS contents have been moved to OLDCELS. In the character "7" (marked with reference numeral 25), cell 251 resides in OLDCELS after two row scans, while cell 252 is in NEWCELS. The logic for determining whether cells can be combined is based upon proximity to the previous cell (located in OLDCELS) above the NEWCELS, rather than being conditioned upon the block being built in WBLKTAB. This allows overlapping characters such as 25 and 26 to be placed into separate blocks. Cells 251 and 252 are actually combined by storing an entry in WBLKTAB which contains the horizontal starting address XS and the upper address YU of cell 251, but the horizontal finish address XF and lower address YL of cell 252.

At this time, cells 251 and 252 reside in OLDCELS and NEWCELS respectively, while a block representing the combined extent of both cells resides in WBLKTAB. In the next scan row, cell 253 expands only the lower coordinate YL of the current WBLKTAB in block 1116, since the horizontal XS and XF addresses already extend beyond the boundaries of cell 253. Blocking continues for cells 254—259. Since these cells also lie within the horizontal extent of cells 251—252, the XS and XF coordinates for character 25 remain constant, as shown pictorially by the heavy outline. The blank scans following cell 259 terminate the combination process, establishing the final lower boundary YL for the WBLKTAB entry for character 25.

Note that blocks (characters) 25 and 26 are processed in parallel, one scan row at a time. Upon the completion of processing, the boundaries for two distinct but overlapping characters 25 and 26 are defined.

Figure 12 shows a conventional line-finding procedure 1115 in greater detail. This procedure is optional, and is not required to practice the invention. It discriminates between a line of character images and noise above and below the line; it also tracks lines which are skewed (not exactly horizontal) on the document; by generating and following a centerline.

After starting at block 1201, the procedure obtains at 1202 from 1102, Figure 11a, a description of a particular area of document 112, containing, e.g., the size and style of printing expected. After certain work areas are initialized at 1203, step 1204 checks all blocks in the GOODBLKS table for appropriate size to be valid characters. Invalid blocks are marked by any convenient means, such as by making their XS coordinates negative. The line-find algorithm described here works on an area that is 64 scans (pels) high using a 64-position working array called CENTERS. Step 1205 then logically normalizes all valid blocks in the area to the top of the area. In Figure 2a the top of the area is Y=00881; thus to perform the normalization step, 00881 would be subtracted from each GOODBLKS YU and YL entry.

Step 1206 generates the line-find array (CENTERS) values. The centerline of each block is calculated and normalized with respect to the top of the area. In Figure 2a the block centerlines are as follows:

$$\text{Block } 21=20$$
$$\text{Block } 22=21$$
$$\text{Block } 23=20$$
$$\text{Block } 24=21$$

The CENTERS array is generated by summing the block widths (XF−XS+1) for each block that shares the same centerline position. In the example given in Figure 2a, the widths of blocks 21 and 23 are summed to provide entry CENTERS (20) and blocks 22 and 24 are summed to provide entry CENTERS (21). All other

EP 0 113 471 B1

positions in the CENTERS array are set to zero. For the example in Figure 2a, at the completion of steps 1206 the array values would be:

$$CENTERS(20)=33$$
$$CENTERS(21)=59$$

Step 1207 finds the maximum of the CENTERS values (21 in Figure 2a) and compares it in steps 1208 with a control value 30. If the maximum centerline is 30, the centerline will be used in step 1213 to collect all blocks in the area that intersect the centerline; that is, those GOODBLKS entries whose YU coordinates lie above the centerline and whose YL coordinates lie below it. Finally, step 1214 completes the processing for the line thus found. The identified blocks are analyzed to check for abnormalities. Block 24, Figure 2a, e.g., is much wider than blocks 21, 22 and 23; it would be identified as requiring a further segmentation step. The control program is then notified that the line find process has completed.

If step 1208 determines that the maximum centerline is 30, it is possible that more than one line of characters are present; step 1209 searches the CENTERS array to determine if there is an array position 30 having a nonzero value. If one is found, step 1210 causes step 1212 to use the new maximum centerline for the search procedure in step 1213; otherwise, step 1211 selects the original centerline. Control ultimately passes to step 1214 as described above.

## Claims

1. Method for locating an individual image in a field containing multiple images so that said individual image can be processed as a single entity, comprising:

scanning said field along adjacent lines to produce a stream of video elements representing said image field, and

memorizing said video elements, characterized in that:

the memorized video elements are interrogated with a first set of logics in a plurality of scan rows having a predetermined height of more than one scan line, to produce a plurality of boundary coordinates designations defining a plurality of rectangular cells each of which frames connected elements in the scan row;

the boundary coordinates designations defining the plurality of rectangular cells are interrogated with a second set of logics to produce a set of boundary coordinates designations for a block representing an area containing only said individual image, taking account of the video content of the cells and their neighbours;

the boundary coordinates designations for a block representing an area containing only said individual image are outputted so as to permit image recognition means to select certain of said video elements as belonging to said individual image.

2. Method according to claim 1, wherein the horizontal starting and ending boundary coordinates of each of said cells are determined by said first set of logics based upon predetermined combinations of said video elements.

3. Method according to claims 1 and 2, wherein the vertical starting and ending boundary coordinates of each of said cells are determined by said first set of logics based upon a profile of said video elements.

4. Method according to claims 1 to 3, wherein said logics operate in parallel upon multiple vertically aligned ones of said video elements.

5. Method according to claims 1 to 4, wherein said block is produced by expanding a set of coordinates defining boundaries of said block whenever said second set of logics combines said cells.

6. Method according to claims 1 to 5, wherein said second set of logics is responsive to a new cell and to an old cell previously combined with said block to determine whether said new cell should be combined with said block.

7. Method according to claims 1 to 6, wherein said second set of logics completes said block whenever no further cells combine into said block.

8. Apparatus for locating an individual image in a field containing multiple images so that said individual image can be processed as a single entity, comprising:

a scanner (110) for producing a stream of video elements representing said field of images,

an image memory (130) coupled to said scanner (110) for storing said video elements,

logics (151, 153) responsive to the video elements stored in said image memory (130) to identify the video elements belonging to said individual image and output them to image recognition means (140), characterized by:

input logic (151) for interrogating the video elements in the image memory (130) in a plurality of scan rows having a predetermined height of more than one scan line, to produce a plurality of boundary coordinates designations defining a plurality of rectangular cells each of which frames connected elements in the scan row;

blocking logic (153) responsive to said boundary coordinates designations of said cells for producing a set of boundary coordinates designations for a block representing an area containing only said individual image, taking account of the video content of the cells and their neighbours, and for transmitting said

10

boundary coordinates designations of said block to said image recognition means (140) for recognition of said individual image.

9. Apparatus according to claim 8, wherein said input logic (151) comprises a plurality of random logics (41) operating in parallel to produce various ones of said cell representations.

10. Apparatus according to claims 9 and 10, wherein said input logic (151) includes a pair of counters (35, 38) responsive to said scanner (110) for outputting a set of current coordinates as members of said cell representations.

11. Apparatus according to claims 10 and 11, wherein said blocking logic (153) includes a microprocessor (42) coupled both to said input logic (151) and to said image memory (130).

**Patentansprüche**

1. Verfahren für die Anordnung eines einzelnen Bildes in einem Feld, dans mehrere Bilder enthält, so daß besagtes Einzelbild als einzelne Einheit verarbeitet werden kann, enthaltend:

Abtasten des besagten Feldes an anliegenden Zeilen entlang, um einen Fluß von Videoelementen zu erzeugen, die das besagte Bildfeld darstellen, und

Speicherung der besagten Videoelemente, dadurch gekennzeichnet, daß:

die gespeicherten Videoelemente mit einem ersten Satz logischer Vorrichtungen abgefragt werden, in einer Mehrzahl von Abtastreihen mit vorgegebener Höhe von mehr als einer Abtastzeile, um eine Mehrzahl von Grenzkoordinatenbezeichnungen zu liefern, die eine Mehrzahl rechteckiger Zellen definieren, deren Rahmen verbundene Elemente in der Abtastreihe sind;

die Grenzkoordinatenbezeichnungen, die die Mehrzahl rechteckiger Zellen definierten, werden mit einem zweiten Satz logischer Schaltungen abgefragt, um einen Satz von Grenzkoordinatenbezeichnungen für einen Block zu liefern, der ein Feld darstellt, das nur besagtes Einzelbild enthält, wobei die Videoinhalte der Zellen und ihrer Nachbarzellen berücksichtigt werden;

die Grenzkoordinatenbezeichnungen für einen Block, der eine Zone darstellt, die nur besagtes Einzelbild enthält, werden so ausgegeben, daß die Bilderkennungsmittel fähig sind, gewisse Videoelemente als zum besagten Einzelbild zugehörig zu erkennen.

2. Verfahren gemäß Anspruch 1, in dem die horizontalen Anfangs- und End-Grenzkoordinaten einer jeden der besagten Zellen durch besagten ersten Satz logischer Schaltungen auf der Grundlage vorgegebener Kombinationen der besagten Videoelemente bestimmt werden.

3. Verfahren gemäß Anspruch 1 und 2, in dem die vertikalen Anfangs- und Endgrenzkoordinaten einer jeden der besagten Zellen durch besagten ersten Satz logischer Schaltungen auf der Grundlage eines Profils besagter Videoelemente bestimmt werden.

4. Verfahren gemäß Anspruch 1 bis 3, in dem besagte logische Schaltungen parallel an mehrfach vertikal ausgerichteten der besagten Videoelemente arbeiten.

5. Verfahren gemäß Anspruch 1 bis 4, in dem besagter Block durch Dehnung eines Koordinatensatzes erzeugt wird, der die Grenzen des Blocks festlegt, immer wenn besagter zweiter Satz logischer Schaltungen die besagten Zellen kombiniert.

6. Verfahren gemäß Anspruch 1 bis 5, in dem besagter zweiter Satz logischer Schaltungen auf eine neue Zelle und auf eine alte, vorher mit besagtem Block kombinierte Zelle anspricht, um zu ermitteln, ob besagte neue Zelle mit besagtem Block zu kombinieren ist.

7. Verfahren gemäß Anspruch 1 bis 6, in dem besagter zweiter Satz logischer Schaltungen besagten Block ergänzt, immer wenn keine weitere Zelle mit besagtem Block kombiniert wird.

8. Gerät zur Lokalisierung eines einzelnen Bildes in einem Feld, das veilfache Bilder enthält, so daß besagtes Einzelbild als einzelne Einheit verarbeitet werden kann, enthaltend:

einen Scanner (110) zum Erzeugen eines Flusses von Videoelementen, die besagtes Bildfeld darstellen,

einen Bildspeicher (130), der mit besagtem Scanner (110) gekoppelt ist, um die besagten Videoelemente zu speichern,

logische Schaltungen (151, 153), die auf die in besagem Bildspeicher (130) abgelegten Videoelemente ansprechen, um die Videoelemente zu identifizieren, die besagtem Einzelbild angehöhren, und sie an die Bilderkennungsmittel (140) ausgeben, gekennzeichnet durch:

eine Eingabelogik (151) für die Abfragung der Videoelemente im Bildspeicher (130) in einer Mehrzahl von Abtastreihen mit einer vorgegebenen Höhe von mehr als einer Abtastzeile, um eine Mehrzahl von Grenzkoordinatenbezeichnungen zu erzeugen, die ine Mehrzahl rechteckiger Zellen definieren, von denen jede verbundene Elemente in der Abtastzeile einfaßt;

eine Sperrlogik (153), die auf besagte Grenzkoordinatenbezeichnungen besagter Zellen anspricht, um einen Satz Grenzkoordinatenbezeichnungen für einen Block zu erzeugen, der eine Zone darstellt, die nur besagtes Einzelbild enthält, unter Berücksichtigung des Videoinhalts der Zellen und ihrer Nachbarzellen, und um besagte Grenzkoordinatenbezeichnungen des besagten Blockes zur Erkennung des besagten Einzelbildes an die besagten Bilderkennungsmittel (140) zu übermitteln.

9. Gerät gemäß Anspruch 8, in dem besagte Eingangslogik (151) eine Mehrzahl von Logikschaltungen mit beliebigem Zugriff (41) enthält, die parallel arbeiten, um verschiedene besagter Zellendarstellungen zu erzeugen.

10. Gerät gemäß Anspruch 9 und 10, in dem besagter Eingangslogik (151) ein Paar Zähler (35, 38)

# EP 0 113 471 B1

enthält, die auf besagten Scanner (110) ansprechen, um einen Satz laufender Koordinaten als Glieder der besagten Zellendarstellungen auszugeben.

11. Gerät gemäß Anspruch 10 und 11, in dem besagte Sperrlokig (153) einen Mikroprozessor (42) enthält, der sowohl an die besagte Eingabelogik (151) als auch an besagten Bildspeicher (130) angeschlossen ist.

## Revendications

1. Procédé pour localiser une image individuelle dans une zone contenant des images multiples, de sorte que ladite image individuelle peut être traitée comme une entité unique, comprenant:

le balayage de ladite zone le long de lignes adjacentes, pour produire une suite d'éléments vidéo représentant ladite zone d'image, et

la mémorisation desdits éléments vidéo, caractérisé en ce que:

les éléments vidéo mémorisés sont interrogés avec un premier ensemble de circuits logiques dans une pluralité de rangées de balayages ayant une hauteur prédéterminée supérieure à une ligne de balayage, pour produire une pluralité de désignations de coordonnées de limites définissant une pluralité de cellules rectangulaires dont chacune encadre des éléments connectés dans la rangée de balayages;

les désignations de coordonnées de limites définissant la pluralité de cellules rectangulaires sont interrogées avec un deuxième ensemble de circuits logiques pour produire un ensemble de désignations de coordonnées de limites, pour un bloc représentant une zone qui contient seulement ladite image individuelle, en tenant compte du contenu vidéo des cellules et de leurs voisines;

les désignations de coordonnées de limites pour un bloc représentant une zone qui contient seulement la dite image individuelle sont fournies de manière à permettre à des moyens de reconnaissance d'image de sélectionner certains desdits éléments vidéo comme appartenant à ladite image individuelle.

2. Procédé suivant la revendication 1, dans lequel les coordonnées des limites horizontales de début et de fin de chacune desdites cellules sont déterminées par ledit premier ensemble de circuits logiques sur la base de combinaisons prédéterminées desdits éléments vidéo.

3. Procédé suivant les revendications 1 et 2, dans lequel les coordonnées des limites verticales de début et de fin de chacune desdites cellules sont déterminées par ledit premier ensemble de circuits logiques, sur la base d'un profil desdits éléments vidéo.

4. Procédé suivant les revendications 1 à 3, dans lequel lesdits circuits logiques travaillent en parallèle sur des éléments multiples verticalement alignés desdits éléments vidéo.

5. Procédé suivant les revendications 1 à 4, dans lequel ledit bloc est produit par dilatation d'un ensemble de coordonnées définissant les limites dudit bloc, chaque fois que ledit deuxième ensemble de circuits logiques combine lesdites cellules.

6. Procédé suivant les revendications 1 à 5, dans lequel ledit deuxième ensemble de circuits logiques répond à une nouvelle cellule et à une ancienne cellule précédemment combinée avec ledit bloc, pour déterminer si ladite nouvelle cellule doit être combinée avec ledit bloc.

7. Procédé suivant les revendications 1 à 6, dans lequel ledit deuxième ensemble de circuits logiques complète ledit bloc chaque fois qu'aucune cellule supplémentaire ne se combine dans ledit bloc.

8. Appareil pour localiser une image individuelle dans une zone contenant plusieurs images, de sorte que ladite image individuelle peut être traitée comme une entité unique, comprenant:

un analyseur (110) pour produire une suite d'éléments vidéo représentant ladite zone d'images,

une mémoire d'image (130) reliée audit analyseur (110) pour stocker lesdits éléments vidéo,

des circuits logiques (151, 153) qui répondent aux éléments vidéo stockés dans ladite mémoire d'image (130), pour identifier les éléments vidéo appartenant à ladite image individuelle et les envoyer aux moyens de reconnaissance d'image (140), caractérisé par:

une logique d'entrée (151) pour interroger les éléments vidéo dans la mémoire d'image (130) dans une pluralité de rangées de balayages ayant une hauteur prédéterminée de plus d'une ligne de balayage, afin de produire une pluralité de désignations de coordonnées de limites définissant une pluralité de cellules rectangulaires dont chacune encadre des éléments connectés dans la rangée de balayages;

une logique de groupage (153) qui répond aux dites désignations de coordonnées de limites desdites cellules pour produire un ensemble de désignations de coordonnées de limites pour un bloc représentant une zone qui contient seulement ladite image individuelle, en tenant compte du contenu vidéo des cellules et de leurs voisines, et pour transmettre lesdites désignations de coordonnées de limites dudit bloc auxdits moyens de reconnaissance d'image (140) afin d'identifier ladite image individuelle.

9. Appareil suivant la revendication 8, dans lequel ladite logique d'entrée (151) comprend une pluralité de circuits logiques discrets (41) fonctionnant en parallèle pour produite diverses desdites représentations de cellule.

10. Appareil suivant les revendications 9 et 10, dans lequel ladite logique d'entrée (151) comprend deux compteurs (35, 38) qui répondent audit analyseur (110) pour fournir un ensemble de coordonnées en cours comme composantes desdites représentations de cellule.

11. Appareil suivant les revendications 10 et 11, dans lequel la logique de groupage (153) comprend un microprocesseur (42) relié à la fois à la logique d'entrée (151) et à la mémoire d'image (130).

12

FIG. 1

FIG. 4

FIG. 2a

FIG. 2b

EP 0 113 471 B1

FIG. 3a

FIG. 3b

FIG. 5

FIG. 6

FIG. 7

FIG. 8

FIG. 9

FIG. 10

```
        ┌─────────────┐
        │    START    │～1101
        └──────┬──────┘
               │
    ┌───┐ ┌────▼────────┐
    │ A │ │READ DOCUMENT│～1102          153
    └─┬─┘ │   FORMAT    │               ⌇
      │   └──────┬──────┘
      │          │
      │   ┌──────▼──────┐
      │   │ START SCAN  │～1103
      │   └──────┬──────┘
      │          │
      └──────────┼────────────────────────────┐
                 │                             │
          ┌──────▼──────┐                      │
          │DETECT CEL END;│                    │
          │READ CEL DATA│～1104                │
          │ TO CEL TABLE│                      │
          └──────┬──────┘                      │
                 │        ～1105               │
              ┌──▼──┐                          │
             ╱SCAN ROW╲  NO                    │
            ╲  END    ╱──────────────┐         │
              ╲──┬──╱                │         │
                 │YES                │         │
                 │       ～1106  ┌───▼───1107──┤
              ┌──▼──┐YES  ┌──────────────┐     │
             ╱FIRST SCAN╲──│CEL DATA TO   │     │
            ╲   ROW    ╱   │NEWCELS, WBLKTAB;│──┘
              ╲──┬──╱      │ UPDATE PTRN  │
                 │NO       └──────────────┘
              ┌──▼──┐
              │  B  │
              └─────┘
```

# FIG. IIa

# FIG. IIb

B

MOVE:NEWCELS—OLDCELS, CELTABLE—NEWCELS; COMBINE:OLDCELS, NEWCELS ⟋1108

EXPAND WBLKTAB COORDS FROM CEL RECOMBINATION: MAKE NEW WBLKTAB ENTRY FOR EACH UNCOMBINED NEWCEL ⟋1109

MOVE COMPLETED WBLKTAB ENTRIES TO GOODBLKS; DELETE THEIR OLDCELS ⟋1113

DOCUMENT END 〈1110

YES

NO

BLANK ROW SCAN 〈1114

NO

YES

A

C

## FIG. IIc

C

PERFORM LINE-FIND ON GOODBLKS COORDS — 1115

PASS SELECTED GOODBLKS COORDS TO IMAGE BUFFER ADDRESS REGISTER — 1116

REMOVE SELECTED GOODBLKS ENTRIES — 1117

DOCUMENT END — 1118

YES → END

NO

A

FIG. 12

```
                    ( START )  ⌐1201

              READ DOCUMENT FORMAT  ⌐1202

              INITIALIZE  WORK AREAS  ⌐1203

              DETECT AND MARK  ⌐1204
               INVALID BLOCKS

              NORMALIZE Y COORDS  ⌐1205
               OF ALL BLOCKS

              FIND ARRAY VALUES:  ⌐1206
            CENTERS, HEIGHT, COUNT

              FIND MAXIMUM CL  ⌐1207

        1208⌐
                 CL1 > 30      NO

                   YES
    1209⌐  IDENTIFY CL2(0-30)

        1210⌐
           NO    CL2 = 0    YES

  1212⌐ CL=CL2              CL=CL1  ⌐1211

              FIND ALL BLOCKS  ⌐1213
              PASSING THRU CL

              NOTIFY COMPLETION  ⌐1214

                  ( END )
```